# EUROPÄISCHE PATENTANMELDUNG

(11) **EP 4 187 428 A1**
(43) Veröffentlichungstag der Anmeldung: **31.05.2023**
(21) Anmeldenummer: 22203568.5
(22) Anmeldetag: 25.10.2022
(51) Int. Cl.: G06F 30/00, G06F 30/27

(54) **VERFAHREN UND KI-SYSTEM ZUM BEREITSTELLEN EINER RISSBILDUNGSWAHRSCHEINLICHKEIT EINES TIEFZIEHBAUTEILS**

(30) Priorität: 26.11.2021 DE 102021131082
(71) Anmelder: Audi AG, 85057 Ingolstadt (DE)
(72) Erfinder: Niehues, Klemens, 80797 München (DE); Rosov, Vladislav, 81671 München (DE); Schniertshauer, Johannes, 86153 Augsburg (DE); Xing, Wenting, 85055 Ingolstadt (DE)

(57) **Zusammenfassung**

Die Erfindung betrifft ein KI-System (10) und ein Verfahren zum Bereitstellen einer Rissbildungswahrscheinlichkeit eines Tiefziehbauteils (12). Das Verfahren umfasst ein Aufnehmen (S10) von Bildern von einer Mehrzahl von Tiefziehbauteilen (12) durch eine Bildaufnahmevorrichtung (16); ein Ermitteln (S12) von Rissen in den Tiefziehbauteilen (12) mittels eines ersten KI-Programms aus den aufgenommenen Bildern, wobei zumindest eine Position des jeweiligen Risses bestimmt und als Metadaten gespeichert wird; ein Zuordnen (S14) der Metadaten zu Geometriedaten der Tiefziehbauteile (12); ein Anlernen (S16) eines zweiten KI-Programms mit den zugeordneten Metadaten, wobei das angelernte zweite KI-Programm die Rissbildungswahrscheinlichkeit in Abhängigkeit von Bauteildaten des Tiefziehbauteils (12) ermittelt, wobei die Bauteildaten zumindest die Geometriedaten der Tiefziehbauteile (12) umfassen; und ein Bereitstellen (S18) der von den Bauteildaten abhängigen Rissbildungswahrscheinlichkeit durch das angelernte zweite KI-Programm.

## Beschreibung

Die Erfindung betrifft ein Verfahren zum Bereitstellen einer Rissbildungswahrscheinlichkeit eines Tiefziehbauteils und ein KI-System zum Bereitstellen einer Rissbildungswahrscheinlichkeit eines Tiefziehbauteils.

Beim Entwickeln von Tiefziehbauteilen greifen die Entwickler auf technische Vorgaben, Simulationen und eigenen Erfahrungswerte zurück. Dabei wird ein Kompromiss zwischen der durch den Entwickler erwünschten Formkomplexität und der durch Werkstoffeigenschaften eingeschränkten Herstellbarkeit eingegangen. Wird die Grenze des Machbaren ausgereizt, kann es häufig zu Rissen an den Tiefziehbauteilen kommen. Für die Entwicklung neuer Tiefziehbauteile ist daher eine Information über Risse und/oder eine Rissbildungswahrscheinlichkeit, die in einem Produktionsprozess der Tiefziehbauteile auftritt, sehr hilfreich.

Aus der DE 10 2016 108 163 A1 sind ein Verfahren und eine Vorrichtung zum Bestimmen einer Qualität eines in einem Umformvorgang umgeformten Bauteils bekannt. Die Erfindung weist eine Sensorvorrichtung und eine Kontrolleinheit auf, wobei die Sensorvorrichtung zum Ermitteln von Eigenschaftsdaten am umgeformten Bauteil nach dem Umformvorgang und die Kontrolleinheit zum Auswerten der durch die Sensorvorrichtung ermittelten Eigenschaftsdaten ausgebildet sind.

Aus der DE 10 2010 035 982 A1 ist ein Verfahren zur Pressensteuerung bei einem Tiefziehprozess zur Herstellung von Blechbauteilen bekannt.

Die Aufgabe der vorliegenden Erfindung ist es, eine Rissbildungswahrscheinlichkeit eines Tiefziehbauteils zu ermitteln.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Die Erfindung basiert auf der Idee, dass ein erstes KI-Programm Risse in Tiefziehbauteilen detektiert und Eigenschaften der Risse ermittelt, wobei die Eigenschaften der Risse anschließend mit einer Bauteilinformation, insbesondere einer Geometrie des Tiefziehbauteils, in Bezug gesetzt werden, indem dafür ein zweites KI-Programm angelernt wird, das die Wahrscheinlichkeit eines Risses in Abhängigkeit von den Bauteildaten des Tiefziehbauteils ermittelt.

Durch die Erfindung ist ein Verfahren zum Bereitstellen einer Rissbildungswahrscheinlichkeit eines Tiefziehbauteils bereitgestellt, umfassend als Schritte ein Aufnehmen von Bildern von einer Mehrzahl von Tiefziehbauteilen durch eine Bildaufnahmevorrichtung, ein Ermitteln von Rissen in den Tiefziehbauteilen mittels eines ersten KI-Programms aus den aufgenommenen Bildern, wobei zumindest eine Position des jeweiligen Risses bestimmt und als Rissdaten gespeichert wird, ein Zuordnen der Rissdaten zu Geometriedaten der Tiefziehbauteile und ein Anlernen eines zweiten KI-Programms mit den zugeordneten Rissdaten, wobei das angelernte zweite KI-Programm die Rissbildungswahrscheinlichkeit in Abhängigkeit von Bauteildaten des Tiefziehbauteils ermittelt, wobei die Bauteildaten zumindest die Geometriedaten der Tiefziehbauteile umfassen. Schließlich umfasst das Verfahren ein Bereitstellen der von den Bauteildaten abhängigen Rissbildungswahrscheinlichkeit durch das angelernte zweite KI-Programm.

Mit anderen Worten können zunächst Bilder mehrerer Tiefziehbauteile durch eine Bildaufnahmevorrichtung aufgenommen werden. Die Bildaufnahmevorrichtung kann eine oder mehrere Kameras umfassen, die digitale Bilder der Tiefziehbauteile aufnimmt. Vorzugsweise können mehrere gleiche und/oder mehrere unterschiedliche Tiefziehbauteile aufgenommen werden, die unterschiedliche Geometriedaten aufweisen. Geometriedaten können eine Verformungsverteilung, Abmessungen und/oder lokale Krümmungen des Tiefziehbauteils umfassen. Der Vorteil der Aufnahme mehrerer Bilder von mehreren Tiefziehbauteilen ist, dass unterschiedliche Formen und deren Auswirkung auf deren Rissbildungswahrscheinlichkeit erhalten werden können.

Anschließend können die Bilder der Tiefziehbauteile mittels eines ersten KI-Programms (künstliche Intelligenz-Programm) auf Risse untersucht werden. Das erste KI-Programm kann ein mittels Machine-Learning angelerntes Programm für künstliche Intelligenz sein, insbesondere ein neuronales Netz. Vorzugsweise kann das KI-Programm unterscheiden, ob bestimmte Bereiche des Tiefziehbauteils intakte Stellen aufweisen oder einen Riss, wobei das erste KI-Programm diese Bestimmung besonders bevorzugt auf Pixelebene der Bilder durchführen kann. Wird ein Riss erkannt, kann zumindest die Position des Risses in Metadaten hinterlegt werden. Vorzugsweise können noch weitere Daten des Risses in den Metadaten gespeichert werden, wie beispielsweise eine Anzahl, Abmessung und/oder Form des Risses. Die Schritte des ersten KI-Programms können vorzugsweise durch eine oder mehrere Rechenvorrichtungen durchgeführt werden, wobei eine Rechenvorrichtung einen Computer umfassen kann.

Als Nächstes können die zuvor ermittelten Metadaten mit Geometriedaten der Tiefziehbauteile in Bezug gesetzt werden. Das bedeutet, dass zumindest die Position der Risse mit der Geometrie des Tiefziehbauteils, die durch die Geometriedaten bereitgestellt wird, in Bezug gesetzt wird. Somit kann also zugeordnet werden, bei welcher Geometrie eines jeweiligen Tiefziehbauteils an welchem Ort des Tiefziehbauteils Risse entstehen. Auch dieser Schritt kann durch die Rechenvorrichtung, insbesondere das erste KI-Programm und/oder ein weiteres Bildbearbeitungsprogramm, vorzugsweise automatisiert, durchgeführt werden.

Anschließend kann ein zweites KI-Programm mit den zugeordneten Metadaten und Bauteildaten des Tiefziehbauteils, die zumindest die Geometriedaten des Tiefziehbauteils umfassen, angelernt werden. Das heißt, das zweite KI-Programm kann trainiert werden, so dass es eine Rissbildungswahrscheinlichkeit in Abhängigkeit von den Bauteildaten, insbesondere von den Geometriedaten, der Tiefziehbauteile ermitteln kann. Das zweite KI-Programm kann ein vom ersten KI-Programm unterschiedliches Programm für künstliche Intelligenz sein. Vorzugsweise kann auch das zweite KI-Programm mittels eines maschinellen Lernens, insbesondere eines Deep-Learning-Algorithmus, angelernt werden. Die Rissbildungswahrscheinlichkeit, die durch das zweite KI-Programm ermittelt werden kann, kann eine relative Häufigkeit der Risse in Abhängigkeit von der Position der jeweiligen Risse und der an der Position vorhandenen Geometrie und/oder der Materialeigenschaft des jeweiligen Tiefziehbauteils sein. Auch dieser Schritt kann durch die Rechenvorrichtung oder eine weitere Rechenvorrichtung durchgeführt werden. Die Bauteildaten der Tiefziehbauteile können neben den Geometriedaten zusätzliche Eigenschaftsinformationen über das Tiefziehbauteil aufweisen, wie ein verwendetes Material, Wandstärken und/oder einen Verformungsgrad des Tiefziehbauteils.

Schließlich können die von den Bauteildaten abhängigen Rissbildungswahrscheinlichkeiten durch das zweite KI-Programm bereitgestellt werden. Hierbei können beispielsweise die Rissbildungswahrscheinlichkeiten für einen bestimmten Produktionsprozess von Tiefziehbauteilen angezeigt werden. Alternativ oder zusätzlich kann das angelernte zweite KI-Programm bereitgestellt werden, um eine Planung und/oder Entwicklung von Tiefziehbauteilen zu unterstützen. Dafür kann das zweite KI-Programm beispielsweise als Unterstützung für ein Konstruktionsprogramm bereitgestellt werden, wobei das zweite KI-Programm bei der Planung des Tiefziehbauteils durch das Konstruktionsprogramm Bauteildaten des geplanten Tiefziehbauteils, insbesondere Geometriedaten, automatisiert erkennt und die Rissbildungswahrscheinlichkeit für das geplante Tiefziehbauteil, vorzugsweise in Echtzeit, bereitstellt.

Durch die Erfindung ergibt sich der Vorteil, dass basierend auf der Empirie aus dem realen Produktionsprozess die Rissbildungswahrscheinlichkeit eines Tiefziehbauteils mit hoher Genauigkeit ermittelt werden kann. Des Weiteren können durch das zweite angelernte KI-Programm die Erfahrungswerte quantitativ verwendet werden, um bei der Planung neuer Tiefziehbauteile unterstützend zu wirken, indem die Rissbildungswahrscheinlichkeit bereits bei dem Planungs- und Entwicklungsprozess bereitgestellt werden kann. Somit kann eine wirtschaftliche Bewertung der Formkomplexität erreicht werden, indem die Risshäufigkeit aus der Geometrie für den betrachteten Werkstoff abgeleitet werden kann.

Die Erfindung umfasst auch Ausführungsformen, durch die sich zusätzliche Vorteile ergeben.

Eine Ausführungsform sieht vor, dass das angelernte zweite KI-programm für ein Konstruktionsprogramm bereitgestellt wird, wobei das angelernte zweite KI-Programm bei der Modellierung eines geplanten Tiefziehbauteils durch das Konstruktionsprogramm in Abhängigkeit von den geplanten Bauteildaten die Rissbildungswahrscheinlichkeit für das geplante Tiefziehbauteil ermittelt. Das heißt, dass bei einem Konstruktionsprogramm, das insbesondere ein CAD-Programm sein kann, vorzugsweise in Echtzeit während der Modellierung eines geplanten Tiefziehbauteils ermittelt wird, wie hoch die Rissbildungswahrscheinlichkeit für das geplante Tiefziehbauteil ist. Hierbei können die durch das Konstruktionsprogramm bereitgestellten Bauteildaten durch das zweite KI-Programm analysiert werden und aufgrund der zuvor angelernten Rissbildungswahrscheinlichkeit in Abhängigkeit von den Bauteildaten bestimmt werden, wie hoch die lokale Rissbildungswahrscheinlichkeit für das geplante Tiefziehbauteil ist. Durch diese Ausführungsform ergibt sich der Vorteil, dass ein Benutzer des Konstruktionsprogramms eine instantane Rückmeldung bezüglich der Rissbildungswahrscheinlichkeit in dem Entwicklungsprozess erhält, was Kosten sparen und eine Zuverlässigkeit erhöhen kann, da die Tiefziehbauteile verbessert geplant werden können.

Eine weitere Ausführungsform sieht vor, dass das erste KI-Programm ferner zumindest eine Risseigenschaft der ermittelten Risse bestimmt und in den Metadaten speichert. So kann neben der Position des jeweiligen Risses auch eine oder mehrere weitere Eigenschaften des Risses, insbesondere eine Größe, Anzahl und/oder Form des Risses, erkannt und für das Anlernen des zweiten KI-Programms bereitstellt werden. Durch diese Ausführungsform ergibt sich der Vorteil, dass die Risse noch genauer charakterisiert werden können, was zu einer Verbesserung des Verfahrens beiträgt.

In einer vorteilhaften Ausführungsform ist vorgesehen, dass das zweite KI-Programm zusätzlich zu der Rissbildungswahrscheinlichkeit auch die Risseigenschaft, die in Abhängigkeit von den Bauteildaten zu erwarten ist, bereitstellt. Mit anderen Worten kann die Risseigenschaft, die durch das erste KI-Programm ermittelt wird, zum Anlernen des zweiten KI-Programms verwendet werden, wobei das zweite KI-Programm neben der Rissbildungswahrscheinlichkeit auch klassifizieren kann, welche Risseigenschaft in Abhängigkeit von den Bauteildaten, beispielsweise der Bauteilgeometrie, zu erwarten ist. Somit kann beispielsweise durch das zweite KI-Programm nicht nur die Wahrscheinlichkeit für das Auftraten von Rissen bereitgestellt werden, sondern auch eine zu erwartende Form des Risses. Hierdurch ergibt sich der Vorteil, dass insbesondere ein Entwickler, der neue Tiefziehbauteile plant, die zu erwartende Risseigenschaft berücksichtigen kann und durch Anpassung der geplanten Bauteildaten die Risse besser vermeiden kann, beispielsweise durch Erhöhung einer Wandstärke in einem betreffenden Bereich des Tiefziehbauteils.

Vorzugsweise ist vorgesehen, dass die Risseigenschaft eine Größe und/oder Form der Risse umfasst. Die Größe des Risses kann eine Länge und/oder Breite und/oder Tiefe des Risses umfassen, und die Form des Risses kann ein Verhältnis der Länge zu der Breite und/oder ein Kurvenverlauf des Risses sein.

Ein weitere Ausführungsform sieht vor, dass die Metadaten gleicher Tiefziehbauteile als Segmentierungsmaske vom ersten KI Programm bereitgestellt werden, in der eine Häufigkeit von Rissen in Abhängigkeit der Position bereitgestellt wird, wobei die Segmentierungsmaske mit einer 2D-Projektion des Tiefziehbauteils, die die Bauteildaten umfasst und die eine gleiche Bildaufnahmeperspektive wie die Bildaufnahmevorrichtung aufweist, überlagert wird, wobei das zweite KI-Programm die von den Bauteildaten abhängige Rissbildungswahrscheinlichkeit durch Verknüpfung der durch die 2D-Projektion bereitgestellten Bauteildaten mit der überlagerten Segmentierungsmaske, insbesondere auf Pixelebene, ermittelt. Mit anderen Worten kann das erste KI-Programm die ermittelten Risse als Segmentierungsmaske bereitstellen. Die Segmentierungsmaske kann auf Basis der Metadaten auf die jeweilige Tiefziehbauteilgeometrie projiziert werden. Diese Segmentierungsmaske kann anschließend, beispielsweise durch das zweite KI-Programm und/oder ein Bildverarbeitungsprogramm, mit einer 2D-Projektion des Tiefziehbauteils überlagert werden. Das heißt, dass die Segmentierungsmaske und die 2D-Projektion in einem gleichen Bild angezeigt werden können. Dabei weist die 2D-Projektion vorzugsweise die gleiche Bildaufnahmeperspektive wie die Bildaufnahmevorrichtung auf. Dazu kann die 2D-Projektion beispielsweise aus einem Bild des jeweiligen Tiefziehbauteils erzeugt werden und/oder aus einem Computermodell des Tiefziehbauteils. Vorzugsweise kann in der 2D-Projektion eine Information über die Bauteildaten umfassen, insbesondere die Geometriedaten. Mittels den aus der Überlagerung in Beziehung gesetzten Daten der 2D Projektionen und Segmentierungsmasken kann das zweite KI-Programm angelernt werden und die Rissbildungswahrscheinlichkeit ermittelt werden. Vorzugsweise kann das zweite KI-Programm hierzu die Rissbildungswahrscheinlichkeit für jede Position des Tiefziehbauteils anhand der 2D-Projektion beziehungsweise der Segmentierungsmaske bereitstellen, vorzugsweise für jeden einzelnen Pixel, so dass eine räumliche Rissbildungswahrscheinlichkeit bereitgestellt wird. Durch diese Ausführungsform ergibt sich der Vorteil, dass eine bevorzugte Umsetzungsmöglichkeit des Verfahrens bereitgestellt werden kann.

Vorzugsweise ist vorgesehen, dass die 2D-Projektion des Tiefziehbauteils aus einem CAD-Modell des Tiefziehbauteils erzeugt wird. Im CAD-Modell des Tiefziehbauteils können vorzugsweise die Bauteildaten bereitgestellt werden, wie beispielsweise die genaue Geometrie des Tiefziehbauteils und verwendete Materialien. Das CAD-Modell kann dann mit der gleichen Bildaufnahmeperspektive wie die Bildaufnahmevorrichtung zu einer 2D-Projektion des Tiefziehbauteils umgewandelt werden, auf das die Segmentierungsmaske projiziert werden kann.

Eine weitere Ausführungsform sieht vor, dass durch die Bauteildaten ferner eine Eigenschaft der Geometrie, insbesondere einer lokalen Dicke und/oder einer lokalen Krümmung, und/oder eines Verformungszustands, insbesondere eines Verformungsgrads und/oder eines Dehnungszustands, und/oder einer Materialeigenschaft, insbesondere eines Elastizitätsmoduls, Schubmoduls, Kompressionsmoduls, einer Poissonzahl, einer Streckgrenze und/oder einer Zugfestigkeit, des Tiefziehbauteils bereitgestellt wird. Mit anderen Worten können die Bauteildaten vorgegebene Eigenschaften des Tiefziehbauteils umfassen, die das Tiefziehbauteil mechanisch ausführlich charakterisieren. Hierdurch kann ein die prädiktive Qualität des zweiten KI-Programms zum Bereitstellen der Risserkennungswahrscheinlichkeit noch weiter erhöht werden.

Eine weitere Ausführungsform sieht vor, dass die Rissbildungswahrscheinlichkeit mittels einer farblichen Kodierung auf dem Bild des Tiefziehbauteils und/oder eines geplanten Tiefziehbauteils bereitgestellt wird. So kann das Bild des Tiefziehbauteils an den Stellen, die eine hohe Rissbildungswahrscheinlichkeit aufweisen, eine vorgegebene Farbe aufweisen, um auf die erhöhte Rissbildungswahrscheinlichkeit aufmerksam zu machen. Alternativ oder zusätzlich kann bei der Planung eines Tiefziehbauteils, insbesondere bei Verwendung eines Konstruktionsprogramms, die farbliche Kodierung der Rissbildungswahrscheinlichkeit auf dem geplanten Tiefziehbauteil, insbesondere in einem CAD-Modell des Tiefziehbauteils, angezeigt werden, um einen Entwickler, vorzugsweise in Echtzeit, auf die Rissbildungswahrscheinlichkeit hinzuweisen. Somit kann eine schnelle und intuitive Darstellung der Rissbildungswahrscheinlichkeit bereitgestellt werden.

Ein weiterer Aspekt der Erfindung betrifft ein KI-System zum Bereitstellen einer Rissbildungswahrscheinlichkeit eines Tiefziehbauteils, mit einer Bildaufnahmevorrichtung und zumindest einer Rechenvorrichtung, wobei die Bildaufnahmevorrichtung zum Aufnehmen von Bildern von Tiefziehbauteilen ausgebildet ist, wobei die Rechenvorrichtung zum Ermitteln von Rissen in den Tiefziehbauteilen mittels eines ersten KI-Programms aus den aufgenommenen Bildern, zum Speichern einer Position der jeweiligen Risse in Metadaten, und zum Zuordnen der Metadaten zu Geometriedaten der Tiefziehbauteils ausgebildet ist, wobei die Rechenvorrichtung oder eine weitere Rechenvorrichtung dazu ausgebildet ist, ein zweites KI-Programm mit den zugeordneten Metadaten anzulernen, um mittels des angelernten zweiten KI-Programms die Rissbildungswahrscheinlichkeit in Abhängigkeit von Bauteildaten, die zumindest die Geometriedaten der Tiefziehbauteile umfassen, zu ermitteln und die von den Bauteildaten abhängige Rissbildungswahrscheinlichkeit bereitzustellen. Mit anderen Worten kann das KI-System dazu ausgebildet sein, ein Verfahren nach einem der vorhergehenden Ausführungsformen durchzuführen. Hierbei ergeben sich gleiche Vorteile und Variationsmöglichkeiten wie bei dem Verfahren.

Zu der Erfindung gehört auch die Steuervorrichtung für das KI-System. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Alternativ oder zusätzlich kann das Verfahren in einer Rechnerwolke (Cloud) durchgeführt werden. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen KI-Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen KI-Systems hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisches KI-System gemäß einer beispielhaften Ausführungsform;
- Fig. 2: ein schematisches Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

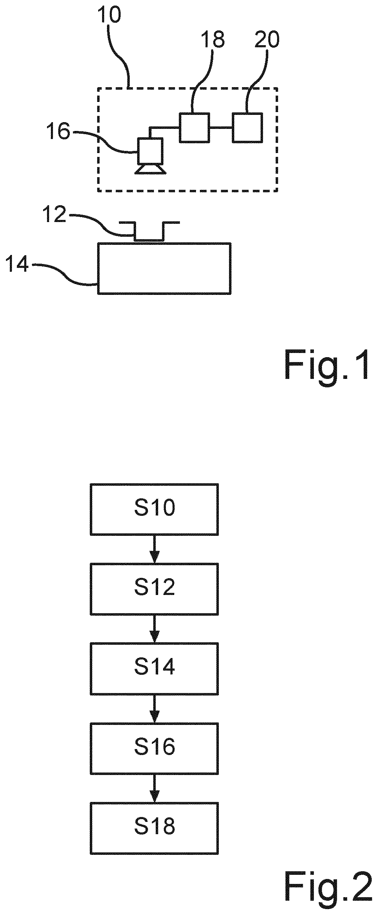

In Fig. 1 ist ein schematisch dargestelltes künstliches Intelligenzsystem (KI-System) 10 zum Bereitstellen einer Rissbildungswahrscheinlichkeit eines Tiefziehbauteils 12 gemäß einer beispielhaften Ausführungsform dargestellt. Das KI-System 10 kann beispielsweise Teil einer Fertigungsstraße 14, insbesondere einer Pressenstraße, sein. Alternativ oder zusätzlich kann das KI-System 10 auch in einer Cloud oder einem Rechenzentrum durchgeführt werden. In der Fertigungsstraße 14 können die Tiefziehbauteile 12 gemäß vorgegebenen Geometriedaten in Form gepresst werden, wobei das KI-System 10 zumindest dazu ausgebildet sein kann, die verarbeiteten Tiefziehbauteile 12 auf Fehler zu überprüfen, insbesondere auf Risse.

Dazu kann das KI-System 10 zumindest eine Bildaufnahmevorrichtung 16 umfassen, die eine oder mehrere Kameras aufweist, wobei die Bildaufnahmevorrichtung 16 dazu ausgebildet ist, Bilder der verarbeiteten Tiefziehbauteile 12 aufzunehmen, vorzugsweise aus einer vorgegebenen Bildaufnahmeperspektive. Die durch die Bildaufnahmevorrichtung 16 aufgenommenen Bilder der Tiefziehbauteile 12 können anschließend durch ein erstes KI-Programm, das auf einer Rechenvorrichtung 18 des KI-Systems 10 betreibbar ist, automatisiert auf Risse geprüft werden. Das erste KI-Programm kann beispielsweise als Deep-Learning-basiertes Segmentierungsmodell bereitgestellt sein, das vorzugsweise Risse auf Pixelebene detektieren kann und eine Information zu einer Position, einer Größe und/oder einer Form der auftretenden Risse in Form von Metadaten speichern kann. Die von dem ersten KI-Programm ermittelten Metadaten können vorzugsweise als Segmentierungsmaske bereitgestellt werden, die eine vom Bild des Tiefziehbauteils abgeleitete Datei mit einer pixelweisen Klassifizierung, ob es sich um einen Riss oder eine intakte Metalloberfläche handelt, darstellt.

Diese Segmentierungsmaske kann zu einer weiteren Rechenvorrichtung 20 weitergeleitet werden, die insbesondere eine Datenbank aufweist, und vorzugsweise einen Zeitstempel der Übermittlung, eine Bauteilnummer und/oder eine Kameranummer. Alternativ können die Segmentierungsmasken direkt zu skalaren Größen verarbeitet werden, die integrale Größen wie zum Beispiel eine Anzahl, eine Abmessung und/oder eine Form der Risse beschreiben. Auf der weiteren Rechenvorrichtung 20 kann dann basierend auf der Segmentierungsmaske jedem Oberflächenpunkt des Tiefziehbauteils 12 eine Rissbildungswahrscheinlichkeit zugeordnet werden. Dabei kann ein zweiter KI-Algorithmus der weiteren Rechenvorrichtung 20 eine 2D-Projektion des Tiefziehbauteils erzeugen, die vorzugsweise aus einem CAD-Modell des Tiefziehbauteils bereitgestellt werden kann. Die 2D-Projektion des Tiefziehbauteils hat dabei vorzugsweise die gleiche Bildaufnahmeperspektive wie die Bildaufnahmevorrichtung 16. Das bedeutet, dass der Ausschnitt und die Kameraposition den jeweiligen Einstellungen der Bildaufnahmevorrichtung 16 entsprechen. Somit kann die Segmentierungsmaske Pixel für Pixel auf die 2D-Projektion übertragen werden, wobei in der 2D-Projektion Bauteildaten des Tiefziehbauteils 12 hinterlegt sein können. Die Bauteildaten können zumindest Geometriedaten des Tiefziehbauteils 12 umfassen. Die Geometriedaten können die Form und/oder einen Verformungszustand des Tiefziehbauteils 12 aufweisen. Zusätzlich können die Bauteildaten ferner Informationen über eine lokale Dicke und/oder eine lokale Krümmung und/oder einen Verformungsgrad und/oder einen Dehnungszustand und/oder eine Materialeigenschaft, insbesondere eines Elastizitätsmoduls, Schubmoduls, Kompressionsmoduls, eine Poissonzahl, eine Steckgrenze und/oder eine Zugfestigkeit, des Tiefziehbauteils 12 umfassen.

Mit der Segmentierungsmaske und den Bauteildaten kann dann das zweite KI-Programm angelernt werden, wobei das angelernte zweite KI-Programm die Rissbildungswahrscheinlichkeit in Abhängigkeit von den Bauteildaten bestimmen kann. Somit kann ein pixelweiser Zusammenhang der Rissbildungswahrscheinlichkeit zu den Bauteildaten des Tiefziehbauteils hergestellt werden. Zum Anlernen des zweiten KI-Programms kann für mehrere unterschiedliche Geometrien der Tiefziehbauteile ein tiefes neuronales Netzwerk, insbesondere ein Convolutional Neuronal Network, ein Transformer Network oder ein anderes Modell reduzierter Ordnung, trainiert werden, das die räumlichen Informationen zur Geometrie beziehungsweise zur Verformung des Tiefziehbauteils 12 mit der räumlichen Rissentstehungswahrscheinlichkeit korreliert.

Anschließend kann die von den Bauteildaten abhängige Rissbildungswahrscheinlichkeit durch das angelernte zweite KI-Programm bereitgestellt werden, wobei das Bereitstellen beispielsweise eine Anzeige eines Bilds des Tiefziehbauteils 12 umfasst, in der die Rissbildungswahrscheinlichkeit farblich kodiert dargestellt ist. Alternativ oder zusätzlich kann das angelernte zweite KI-Programm für ein Konstruktionsprogramm bereitgestellt werden, um bei der Modellierung eines geplanten Tiefziehbauteils in Echtzeit die Rissbildungswahrscheinlichkeit für das geplante Tiefziehbauteil bereitzustellen, was vorzugsweise auch über eine farbliche Markierung durchgeführt werden kann. Somit bekommt ein Benutzer des Konstruktionsprogramms während des Designprozesses von Tiefziehbauteilen ein instantanes Feedback zu der Rissbildungswahrscheinlichkeit durch eine entsprechende farbkodierte Überlagerung über den betrachteten Bauteil und einen Hinweis zur Herstellbarkeit. Insbesondere muss nicht zunächst ein CAD-Modell des Tiefziehbauteils erstellt werden, mittels dem dann eine Simulation bezüglich der möglichen Rissbildungswahrscheinlichkeit durchgeführt werden kann, sondern das zweite KI-Programm kann bereits bei der Konstruktion des CAD-Modells, zum Beispiel schon in der Design-Phase, die Rissbildungswahrscheinlichkeit bereitstellen.

In Fig. 2 ist ein schematisches Verfahrensdiagramm zum Bereitstellen einer Rissbildungswahrscheinlichkeit eines Tiefziehbauteils 12 dargestellt. In einem Schritt S10 können Bilder von einer Mehrzahl von Tiefziehbauteilen 12 durch eine Bildaufnahmevorrichtung 16 aufgenommen werden. In einem Schritt S12 können Risse in den Tiefziehbauteilen durch ein erstes KI-Programm aus den aufgenommenen Bildern ermittelt werden, wobei zumindest eine Position des jeweiligen Risses bestimmt und als Metadaten gespeichert wird. Zusätzlich kann das erste KI-Programm auch eine Risseigenschaft der ermittelten Risse bestimmen und in den Metadaten speichern, wobei die Risseigenschaft zumindest eine Größe und/oder Form der Risse beschreibt. In einem Schritt S14 können die ermöglichten Metadaten zu Geometriedaten der Tiefziehbauteile zugeordnet werden, so dass jeder Pixel einer Geometrie der Tiefziehbauteile eine Information über eine Häufigkeit der dort auftretenden Risse umfasst. Anschließend kann in einem Schritt S16 ein zweites KI-Programm mit den zugeordneten Metadaten angelernt werden, wobei das angelernte zweite KI-Programm die Rissbildungswahrscheinlichkeit in Abhängigkeit von Bauteildaten des Tiefziehbauteils ermittelt, und wobei die Bauteildaten zumindest die Geometriedaten der Tiefziehbauteile umfassen. Vorzugsweise ist vorgesehen, dass die Bauteildaten ferner eine Eigenschaft der Geometrie und/oder einen Verformungszustand und/oder eine Materialeigenschaft des Tiefziehbauteils umfassen. Vorzugsweise kann das zweite KI-Programm auch zusätzlich mit der Risseigenschaft angelernt werden, die das Tiefziehbauteil 12 bei den vorliegenden Bauteildaten aufweist.

Schließlich können in einem Schritt S18 die von den Bauteildaten abhängige Rissbildungswahrscheinlichkeit durch das angelernte zweite KI-Programm bereitgestellt werden, wobei das angelernte zweite KI-Programm vorzugsweise für ein Konstruktionsprogramm bereitgestellt wird, das während einer Planung eines neuen Tiefziehbauteils die Rissbildungswahrscheinlichkeit in Abhängigkeit von den geplanten Bauteildaten ermittelt und in dem Modell des geplanten Tiefziehbauteils mittels einer farblichen Kodierung darstellt.

Insgesamt zeigen die Beispiele, wie durch die Erfindung eine Optimierung eines Konstruktionsprozesses von Tiefziehbauteilen durch Vorhersage von Auftrittswahrscheinlichkeiten von Rissen bereitgestellt werden kann.

## Patentansprüche

1. Verfahren zum Bereitstellen einer Rissbildungswahrscheinlichkeit eines Tiefziehbauteils (12), umfassen die Schritte:
- Aufnehmen (S10) von Bildern von einer Mehrzahl von Tiefziehbauteilen (12) durch eine Bildaufnahmevorrichtung (16);
- Ermitteln (S12) von Rissen in den Tiefziehbauteilen (12) mittels eines ersten KI-Programms aus den aufgenommenen Bildern, wobei zumindest eine Position des jeweiligen Risses bestimmt und als Metadaten gespeichert wird;
- Zuordnen (S14) der Metadaten zu Geometriedaten der Tiefziehbauteile (12);
- Anlernen (S16) eines zweiten KI-Programms mit den zugeordneten Metadaten, wobei das angelernte zweite KI-Programm die Rissbildungswahrscheinlichkeit in Abhängigkeit von Bauteildaten des Tiefziehbauteils (12) ermittelt, wobei die Bauteildaten zumindest die Geometriedaten der Tiefziehbauteile (12) umfassen;
- Bereitstellen (S18) der von den Bauteildaten abhängigen Rissbildungswahrscheinlichkeit durch das angelernte zweite KI-Programm.

2. Verfahren nach Anspruch 1, wobei das angelernte zweite KI-Programm für ein Konstruktionsprogramm bereitgestellt wird, wobei das angelernte zweite KI-Programm bei der Modellierung eines geplanten Tiefziehbauteils durch das Konstruktionsprogramm in Abhängigkeit von den geplanten Bauteildaten die Rissbildungswahrscheinlichkeit für das geplante Tiefziehbauteil ermittelt.

3. Verfahren nach einem der vorhergehenden Ansprüche, wobei das erste KI-Programm ferner zumindest eine Risseigenschaft der ermittelten Risse bestimmt und in den Metadaten speichert.

4. Verfahren nach Anspruch 3, wobei das zweite KI-Programm zusätzlich zu der Rissbildungswahrscheinlichkeit auch die Risseigenschaft, die in Abhängigkeit von den Bauteildaten zu erwarten ist, bereitstellt.

5. Verfahren nach einem der Ansprüche 3 oder 4, wobei die Risseigenschaft eine Größe und/oder Form der Risse umfasst.

6. Verfahren nach einem der vorhergehenden Ansprüche, wobei die Metadaten gleicher Tiefziehbauteile (12) als Segmentierungsmaske bereitgestellt werden, in der eine Häufigkeit von Rissen in Abhängigkeit der Position bereitgestellt wird, wobei die Segmentierungsmaske mit einer 2D-Projektion des Tiefziehbauteils (12), die die Bauteildaten umfasst und die eine gleiche Bildaufnahmeperspektive wie die Bildaufnahmevorrichtung (16) aufweist, überlagert wird, wobei das zweite KI-Programm die von den Bauteildaten abhängige Rissbildungswahrscheinlichkeit durch Verknüpfung der durch die 2D-Projektion bereitgestellten Bauteildaten mit der überlagerten Segmentierungsmaske, insbesondere auf Pixelebene, ermittelt.

7. Verfahren nach Anspruch 6, wobei die 2D-Projektion des Tiefziehbauteils (12) aus einem CAD-Modell des Tiefziehbauteils erzeugt wird.

8. Verfahren nach einem der vorhergehenden Ansprüche, wobei durch die Bauteildaten ferner eine Eigenschaft der Geometrie, insbesondere einer lokalen Dicke und/oder einer lokalen Krümmung, und/oder eines Verformungszustands, insbesondere eines Verformungsgrads und/oder eines Dehnungszustands, und/oder einer Materialeigenschaft, insbesondere eines Elastizitätsmoduls, Schubmoduls, Kompressionsmoduls, einer Poissonzahl, einer Streckgrenze und/oder einer Zugfestigkeit, des Tiefziehbauteils bereitgestellt wird.

9. Verfahren nach einem der vorhergehenden Ansprüche, wobei die Rissbildungswahrscheinlichkeit mittels einer farblichen Kodierung auf dem Bild des Tiefziehbauteils (12) und/oder eines geplanten Tiefziehbauteils bereitgestellt wird.

10. KI-System (10) zum Bereitstellen einer Rissbildungswahrscheinlichkeit eines Tiefziehbauteils (12), mit einer Bildaufnahmevorrichtung (16) und zumindest einer Rechenvorrichtung (18), wobei die Bildaufnahmevorrichtung (16) zum Aufnehmen von Bildern von Tiefziehbauteilen (12) ausgebildet ist, wobei die Rechenvorrichtung (18) zum Ermitteln von Rissen in den Tiefziehbauteilen (12) mittels eines ersten KI-Programms aus den aufgenommenen Bildern, zum Speichern einer Position der jeweiligen Risse in Metadaten, und zum Zuordnen der Metadaten zu Geometriedaten der Tiefziehbauteile (12) ausgebildet ist, wobei die Rechenvorrichtung (18) oder eine weitere Rechenvorrichtung (20) dazu ausgebildet ist, ein zweites KI-Programm mit den zugeordneten Metadaten anzulernen, und mittels des angelernten zweiten KI-Programms die Rissbildungswahrscheinlichkeit in Abhängigkeit von Bauteildaten, die zumindest die Geometriedaten der Tiefziehbauteile (12) umfassen, zu ermitteln und die von den Bauteildaten abhängige Rissbildungswahrscheinlichkeit bereitzustellen.
